# EUROPEAN PATENT APPLICATION

(11) **EP 4 715 651 A1**
(43) Date of publication of application: **25.03.2026**
(21) Application number: 25176031.0
(22) Date of filing: 13.05.2025
(51) Int. Cl.: G06F 21/62, B60W 40/08, G06F 21/31, G06F 21/32, G07C 5/00

(54) **CONSENT CONFIRMATION DEVICE, COMPUTER PROGRAM FOR CONSENT CONFIRMATION AND METHOD FOR CONFIRMING CONSENT**

(30) Priority: 24.09.2024 JP 2024165257
(71) Applicant: TOYOTA JIDOSHA KABUSHIKI KAISHA, Toyota-shi, Aichi-ken 471-8571 (JP)
(72) Inventor: TORII, Haruto, Tokyo, 103-0022 (JP); HASHIMOTO, Ryo, Tokyo, 103-0022 (JP)
(74) Representative: D Young & Co LLP

(57) **Abstract**

Provided is a consent confirmation device that confirms whether or not an occupant consent has been obtained for provision of data acquired in the vehicle to outside of the vehicle, in a manner without creating a burden on the occupant.

The consent confirmation device has a confirming unit that confirms whether or not an occupant consents to provision of data acquired in a vehicle, when occupant identification information identifying the occupant of the vehicle does not match consenter identification information identifying a consenter who has consented to provision of the data.

## Description

### FIELD

The present disclosure relates to a consent confirmation device, a computer program for consent confirmation and a method for confirming consent.

### BACKGROUND

Data acquired from vehicles are provided to outside of the vehicles, for development of vehicle control technologies. Such data includes information regarding vehicles and occupants (for example, drivers), and such information must be handled while considering protection of privacy.

Information is therefore provided after obtaining occupant consent when requesting the use of information collected for vehicles and occupants (see Japanese Unexamined Patent Publication No. 2022-083300, for example).

### SUMMARY

When a vehicle is to be used by the same occupant, repeated request for consent to the same occupant for external provision of information may become bothersome for the occupant. However, when the vehicle occupant has changed due to ownership transfer or sharing of the vehicle, consent should be newly obtained from the occupant for external provision of information.

It is therefore an object of the present disclosure to provide a consent confirmation device that confirms whether occupant consent has already been obtained for provision of data acquired in the vehicle to an outside entity, in a manner that reduces the burden on occupants.
(1) According to one embodiment, the invention provides a consent confirmation device. The consent confirmation device has a confirming unit that confirms whether or not an occupant of a vehicle consents to provision of data acquired in the vehicle when occupant identification information identifying the occupant does not match consenter identification information identifying a consenter who has consented to provision of the data.
(2) The consent confirmation device of (1), it is preferable that the confirming unit determines whether or not the occupant identification information matches the consenter identification information in the vehicle.
(3) The consent confirmation device of embodiment (1) or (2), it is preferable that the consent confirmation device has a data management unit which manages the data, wherein the data management unit stores the data in a storage device of the vehicle but does not provide the data outside of the vehicle, either until it has been determined that the occupant identification information matches the consenter identification information, or until it can be confirmed that the occupant has consented to provision of the data.
(4) The consent confirmation device of (3), it is preferable that the data management unit discards the data when the occupant identification information and the consenter identification information do not match and the occupant has not consented to provision of the data.
(5) The consent confirmation device of any one of embodiments (1) to (4), it is preferable that the confirming unit determines that the occupant identification information matches the consenter identification information when the occupant identification information satisfies determination condition generated based on the consenter identification information.
(6) The consent confirmation device of embodiment (5), it is preferable that the consenter identification information includes identification information for multiple consenters, and the device further comprises a generating unit that generates the determination condition based on identification information from the multiple consenters.
(7) The consent confirmation device of any one of embodiments (1) to (6), it is preferable that the consenter identification information includes terminal identification information identifying a terminal of the consenter, a parking location of the vehicle, registered country information for the vehicle, owner information for the vehicle, biometric information for the consenter or vehicle operation information for the consenter.
(8) The consent confirmation device of any one of embodiments (1) to (7), it is preferable that the data acquired in the vehicle includes specific data which specify the occupant.
(9) The consent confirmation device of any one of embodiments (1) to (8), it is preferable that the consent confirmation device has a registering unit which registers the occupant identification information as the consenter identification information when it has been confirmed by the confirming unit that the occupant has consented to provision of the data.
(10) The consent confirmation device of embodiment (1) or (2), it is preferable that the consent confirmation device has a data management unit that provides the data outside of the vehicle when the occupant identification information matches the consenter identification information.
(11) According to another embodiment, a computer-readable, non-transitory storage medium storing a computer program for consent confirmation is provided. The computer program causes a processor to execute a process, and the process includes confirming whether or not an occupant of a vehicle consents to provision of data acquired in the vehicle, when occupant identification information identifying the occupant does not match consenter identification information identifying a consenter who has consented to provision of the data. According to still another embodiment, the computer program or a computer program product including the computer program for consent confirmation is provided.
(12) According to another embodiment, a method for confirming consent carried out by a computer is provided. The method includes confirming whether or not an occupant of a vehicle consents to provision of data acquired in the vehicle, when occupant identification information identifying the occupant does not match consenter identification information identifying a consenter who has consented to provision of the data.

The consent confirmation device of the present disclosure exhibits an effect whereby it is possible to confirm whether or not occupant consent has been obtained for external supply of data acquired in the vehicle, in a manner that reduces burden on the occupant.

The object and advantages of the present disclosure will be realized and attained by means of the elements and combinations particularly specified in the claims. It is to be understood that both the foregoing general description and the following detailed description are exemplary and explanatory and are not restrictive of the invention, as claimed.

### BRIEF DESCRIPTION OF DRAWINGS

Fig. 1 is a general schematic drawing of a data collecting system in which a data collecting device of the embodiment is mounted.
Fig. 2 is a sequence diagram showing data collection processing in the data collecting system according to the embodiment.
Fig. 3 is a hardware configuration diagram for a vehicle in which the data collecting device is mounted.
Fig. 4 is a diagram showing the cabin of the vehicle.
Fig. 5A is a drawing showing an example of a registration table.
Fig. 5B is a drawing showing another example of a registration table.
Fig. 5C is a drawing showing yet another example of a registration table.
Fig. 6 is an example of an operation flow chart for confirmation processing by the data collecting device.
Fig. 7 is a diagram illustrating generation of determination conditions.
Fig. 8 is an example of an operation flow chart for update processing by the data collecting device.
Fig. 9 is a diagram illustrating update of determination conditions.
Fig. 10 is a diagram illustrating another embodiment of a data collecting device.

### DESCRIPTION OF EMBODIMENTS

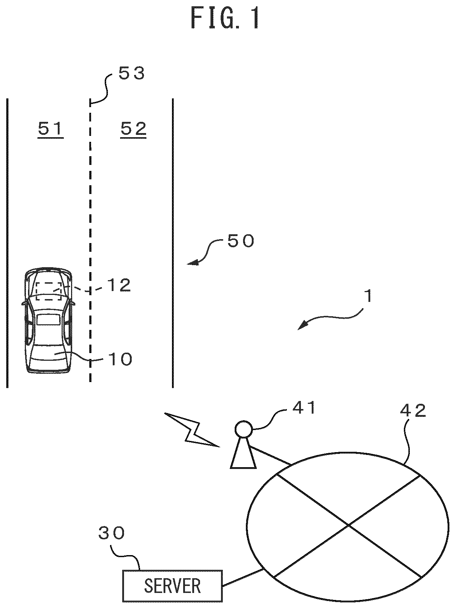

Fig. 1 is a general schematic drawing showing a data collecting system 1 in which a data collecting device 12 of the embodiment is mounted. The data collecting system 1 has at least one vehicle 10 and a server 30. The data collecting device 12 is mounted in the vehicle 10. The data collecting device 12 collects data in the vehicle 10. The data collecting device 12 is an example of a consent confirmation device. By accessing a wireless base station 41 (hereunder also referred to as "macrocell base station 41"), for example, which provides macrocells connected via a communication network 42 and gateway (not shown) which are linked with the server 30, the vehicle 10 is placed in connection with the server 30 via the macrocell base station 41 and communication network 42. The vehicle 10 may also be a vehicle operated by manual driving alone. The vehicle 10 may also be a vehicle having a driving assist function for automatic control of at least one from among acceleration, braking and steering.

Although only one vehicle 10 is depicted in Fig. 1, the data collecting system 1 may also have multiple vehicles 10. Likewise, more than one macrocell base station 41 may be connected to the communication network 42.

In the example shown in Fig. 1, the vehicle 10 is traveling on a road 50. The road 50 has two lanes 51, 52. The vehicle 10 is traveling on the lane 51. The lane 51 and lane 52 are divided by a lane marking line 53.

The data collecting device 12 mounted in the vehicle 10 sends data to be acquired in the vehicle 10 (hereunder referred to as "collection data") to the server 30.

The server 30 receives collection data from the vehicle 10 via the communication network 42. The collection data is used for improving vehicle control and for generating and updating high-precision maps. The collection data is used as teacher data for machine learning, for example. A high-precision map is referred to for self-driving of an automatic driving vehicle.

The collection data may include personal information that identifies an occupant of the vehicle 10. Therefore, when collection data is to be provided (to an entity) outside of the vehicle 10, it is preferable to obtain the consent of the occupant of the vehicle 10. However, repeated requests for consent to an occupant who has already consented to provision of collection data may become bothersome for the occupant.

According to the data collecting device 12 of this embodiment, the collection data is provided outside of the vehicle 10 without requesting the consent of the occupant of the vehicle 10, when the occupant identification information that identifies the occupant of the vehicle 10 matches consenter identification information identifying a consenter who has already consented to provision of collection data. Since collection data is provided outside of the vehicle 10 without making inquiry to the occupant when the occupant identification information matches consenter identification information, no further burden is placed on the occupant.

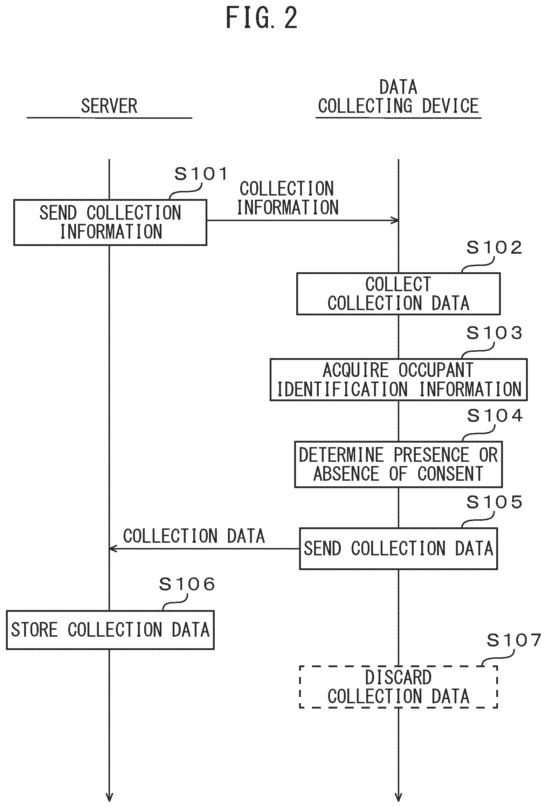

Fig. 2 is a sequence diagram showing data collection processing in a data collecting system 1. Operation of the data collecting system 1 will now be described in overview with reference to Fig. 2. Although only one vehicle 10 is shown in Fig. 1, the server 30 can carry out the same processing for multiple vehicles as well.

First, the server 30 sends collection information representing the collection data to be collected to the vehicle 10 via the communication network 42 and macrocell base station 41 (step S101). The collection information includes, for example, the type of collection data, and the collection conditions under which the collection data is collected (for example, the location of the vehicle 10, the driving state of the vehicle 10 and the state of the occupant of the vehicle 10).

The data collecting device 12 then initiates collection of collection data, based on the collection information (step S102). In other words, the data collecting device 12 acquires predetermined collection data in the vehicle 10.

The data collecting device 12 then acquires occupant identification information for identification of the occupant of the vehicle 10 (step S103). The occupant identification information is information corresponding to the consenter identification information, and it is information of the same type as the consenter identification information. The occupant identification information and consenter identification information will be described in detail below.

The data collecting device 12 then compares the occupant identification information and the consenter identification information, and determines whether or not the occupant of the vehicle 10 has consented to provide collection data to outside entities (step S104). When the occupant identification information and the consenter identification information match, the data collecting device 12 determines that the occupant of the vehicle 10 has already consented to provide collection data to outside entities. When the occupant identification information and the consenter identification information do not match, on the other hand, the data collecting device 12 confirms whether or not the occupant of the vehicle 10 consents to providing collection data to outside entities.

When the occupant identification information and the consenter identification information have been matched, or when the occupant has already consented to provision of collection data, the data collecting device 12 may provide collection data outside of the vehicle 10. Specifically, the data collecting device 12 sends the collection data to the server 30 via the macrocell base station 41 and communication network 42 (step S105).

When the server 30 receives the collection data, the server 30 stores the collection data (step S106).

On the other hand, when the occupant identification information and consenter identification information do not match and the occupant has not consented to providing collection data, the data collecting device 12 discards the collection data without sending the collection data to the server 30 (step S107). This results in deletion of the collection data from the vehicle 10.

With the data collecting system 1 of the embodiment described above it is possible to confirm occupant consent for provision of collection data acquired in the vehicle 10 to outside entities, while reducing burden on the occupant.

The data collecting system 1 may also include multiple vehicles 10, but since each vehicle has the same construction and carries out the same processing for data collection processing, only one vehicle 10 will be assumed in the following description.

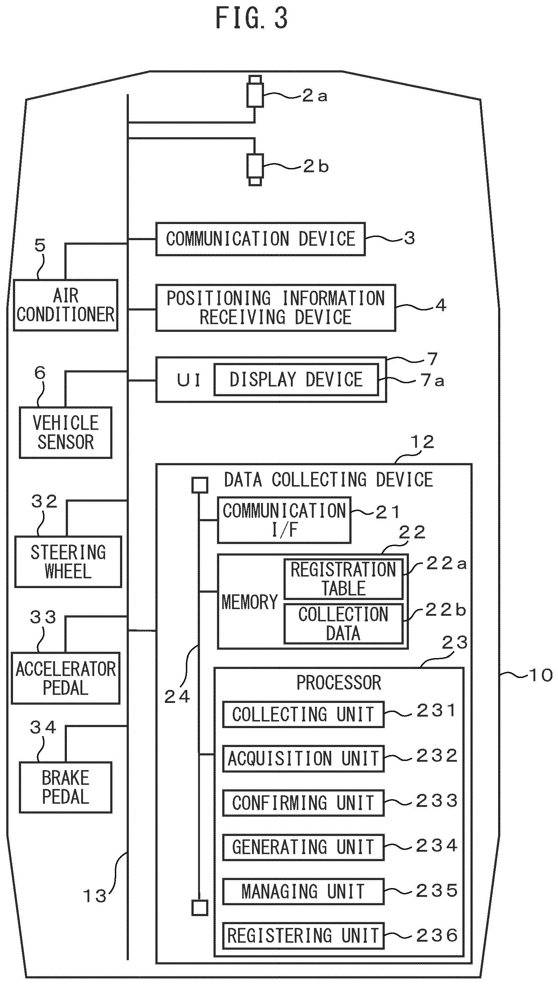

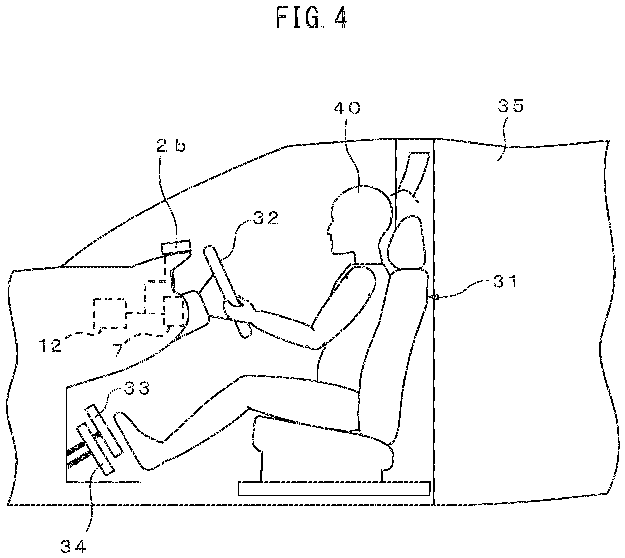

Fig. 3 is a hardware configuration diagram for the vehicle 10, and Fig. 4 is a diagram showing the cabin 35 of the vehicle 10.

As shown in Fig. 3, the vehicle 10 has a front camera 2a, a monitoring camera 2b, a communication device 3, a positioning information receiving device 4, an air conditioner 5, a vehicle sensor 6, a user interface (UI) 7, a steering wheel 32, an accelerator pedal 33, a brake pedal 34 and a data collecting device 12. As shown in Fig. 4, the driver 40 sits in the driving seat 31 in the cabin 35 in a manner allowing operation of the steering wheel 32, accelerator pedal 33 and brake pedal 34.

The vehicle 10 may also have any other sensors or operating devices in addition to the sensor and operating devices described above. Such sensors may include, for example, a sensor that detects the environment or condition surrounding the vehicle 10, a sensor that detects the condition inside the vehicle 10 (including the state of occupants), and a sensor that detects the state of the vehicle 10. Operating devices include, for example, devices relating to driving of the vehicle, and devices relating to the environment in the cabin 35. A sensor that detects the environment surrounding the vehicle 10 includes, for example, a LiDAR sensor, as a distance sensor (not shown) for measurement of the distance of the vehicle 10 to surrounding objects.

The front camera 2a, monitoring camera 2b, communication device 3, positioning information receiving device 4, air conditioner 5, vehicle sensor 6, user interface (UI) 7, steering wheel 32, accelerator pedal 33, brake pedal 34 and data collecting device 12 are connected in a communicable manner via an in-vehicle network 13 conforming to controller area network standards.

The front camera 2a is mounted inside the vehicle 10 and directed toward the front of the vehicle 10. The front camera 2a, for example, acquires a front image in which the environment of a predetermined region ahead of the vehicle 10 is shown, at a predetermined cycle. The front image is an example of information representing the environment surrounding the vehicle 10. The front image can show the road in the predetermined region ahead of the vehicle 10, and road features in the area surrounding the road.

The front camera 2a has a 2D detector composed of an array of photoelectric conversion elements with visible light sensitivity, such as a CCD or C-MOS, and an imaging optical system that forms an image of the photographed region on the 2D detector. Each time a front image is acquired, the front camera 2a outputs the front image and the front image acquisition time at which the front image was acquired, through the in-vehicle network 13 to the data collecting device 12.

The monitoring camera 2b is disposed in the cabin 35 in a manner allowing it to acquire monitor images including the face of the driver 40 driving the vehicle 10. The monitoring camera 2b is disposed on the dashboard, for example. The monitoring camera 2b may be disposed in the cabin 35 in a manner allowing it to acquire monitor images including the faces of occupants other than the driver 40, sitting on each seat of the vehicle 10. In this case, a plurality of monitoring cameras 2b may be provided in the vehicle 10. The monitoring camera 2b acquires monitor images representing the area near the driving seat 31, at a predetermined cycle, for example. The monitor images are an example of information representing the state inside the vehicle 10. Each monitor image also includes the face of the driver 40 sitting in the driving seat 31.

The monitoring camera 2b has a 2D detector composed of an array of photoelectric conversion elements with infrared sensitivity, such as a CCD or C-MOS, and an imaging optical system that forms an image of the acquired region on the 2D detector. Each time a monitor image is acquired, the monitoring camera 2b outputs the monitor image and the monitor image acquisition time at which the monitor image was acquired, to the data collecting device 12 via the in-vehicle network 13. The monitor image is used for monitoring of the state of the driver 40, for example.

The communication device 3 has an interface circuit for connecting the data collecting device 12 to the macrocell base station 41. The communication device 3 is configured in a communicable manner with the server 30 via the macrocell base station 41 and communication network 42. The communication device 3 is an example of a device communication unit.

The positioning information receiving device 4 outputs positioning information that represents the current location of the vehicle 10. The positioning information receiving device 4 may be a GNSS receiver, for example. The positioning information is an example of information representing the state of the vehicle 10. The positioning information receiving device 4 outputs the positioning information acquisition time at which positioning information was acquired, to the data collecting device 12 via the in-vehicle network 13, each time GNSS information is acquired at a predetermined receiving cycle. The positioning information includes the current location of the vehicle 10 as represented by world coordinates, for example. The current location of the vehicle 10 includes latitude and longitude, for example.

The air conditioner 5 is controlled by an occupant, including the driver 40, to adjust the temperature, humidity and airflow rate in the cabin 35 to a set temperature, humidity and airflow rate. An occupant, which may also be the driver 40, operates the UI 7 to control the air conditioner 5. The air conditioner 5 is an example of a device relating to the environment inside the cabin 35.

The air conditioner 5 outputs an operation signal representing the state of operation of the air conditioner 5, to the data collecting device 12 via the in-vehicle network 13. The data collecting device 12 can acquire the set temperature, set humidity and set airflow rate for the air conditioner 5 based on the operation signal.

The vehicle sensor 6 detects the state of the vehicle 10 and outputs a sensor signal representing the state of the vehicle 10 to the data collecting device 12 via the in-vehicle network 13. The vehicle sensor 6 detects the speed, angular velocity and acceleration of the vehicle 10, for example.

The steering wheel 32 is a device operated by the driver 40, and the steering wheel 32 is an example of a device relating to driving of the vehicle 10. The steering wheel 32 also generates a steering signal corresponding to the steering angle by the driver 40. The steering wheel 32 also outputs the steering signal to the data collecting device 12 via the in-vehicle network 13, at each predetermined cycle.

The accelerator pedal 33 is a device operated by the driver 40, and the accelerator pedal 33 is an example of a device relating to driving of the vehicle 10. The accelerator pedal 33 generates an accelerator signal corresponding to the accelerator level created by the driver. The accelerator pedal 33 also outputs the accelerator signal to the data collecting device 12 via the in-vehicle network 13, at each predetermined cycle.

The brake pedal 34 is a device operated by the driver 40, and the brake pedal 34 is an example of a device relating to driving of the vehicle 10. The brake pedal 34 generates a brake signal corresponding to the brake level of the driver. The brake pedal 34 also outputs the brake signal to the data collecting device 12 via the in-vehicle network 13, at each predetermined cycle.

The UI 7 is an example of a notification unit for notifying an occupant. The UI 7, controlled by the data collecting device 12, notifies the driver 40 of information relating to the vehicle 10. The UI 7 has a display device 7a such as a liquid crystal display or touch panel, for display of the information. The UI 7 may also have an acoustic output device (not shown) to notify the driver 40 of the information. The UI 7 also has a touch panel or operating button, for example, as an input device for inputting operation information from the driver 40 to the vehicle 10. The UI 7 outputs the input information to the data collecting device 12 via the in-vehicle network 13.

The data collecting device 12 carries out collection processing, acquisition processing, confirmation processing, generation processing, management processing and registration processing. For this purpose, the data collecting device 12 has a communication interface (IF) 21, a memory 22 and a processor 23. The communication interface 21, memory 22 and processor 23 are connected via signal wires 24. The communication interface 21 has an interface circuit to connect the data collecting device 12 with the in-vehicle network 13. A computer, for example, may be used as the data collecting device 12.

The memory 22 is an example of a storage unit, and the memory 22 has a volatile semiconductor memory and a non-volatile semiconductor memory, for example. The memory 22 may also have another storage device such as a hard disk device. The memory 22 stores an application computer program and various data to be used for information processing carried out by the processor 23. The memory 22 also stores the registration table 22a and collection data 22b.

In the registration table 22a there are registered one or more consenter identification information items that identify a consenter who has consented to provide data acquired in the vehicle 10, in association with a consenter ID representing the consenter. The consenter identification information is registered in the registration table 22a in association with the registration date on which the consenter identification information was registered in the registration table 22a, and the most recent confirmation date on which the consenter identification information was confirmed to match the occupant identification information.

The consenter identification information for identification of each consenter may include a single type of information, or it may include multiple different types of information. The type of consenter identification information may include, for example, terminal identification information identifying the terminal device of the consenter, the parking location of the vehicle 10, the registered country information for the vehicle 10, the owner information for the vehicle 10, biometric information for the consenter, or vehicle operation information for the consenter. The consenter identification information may include only identification information from a single consenter, or it may include identification information from multiple consenters.

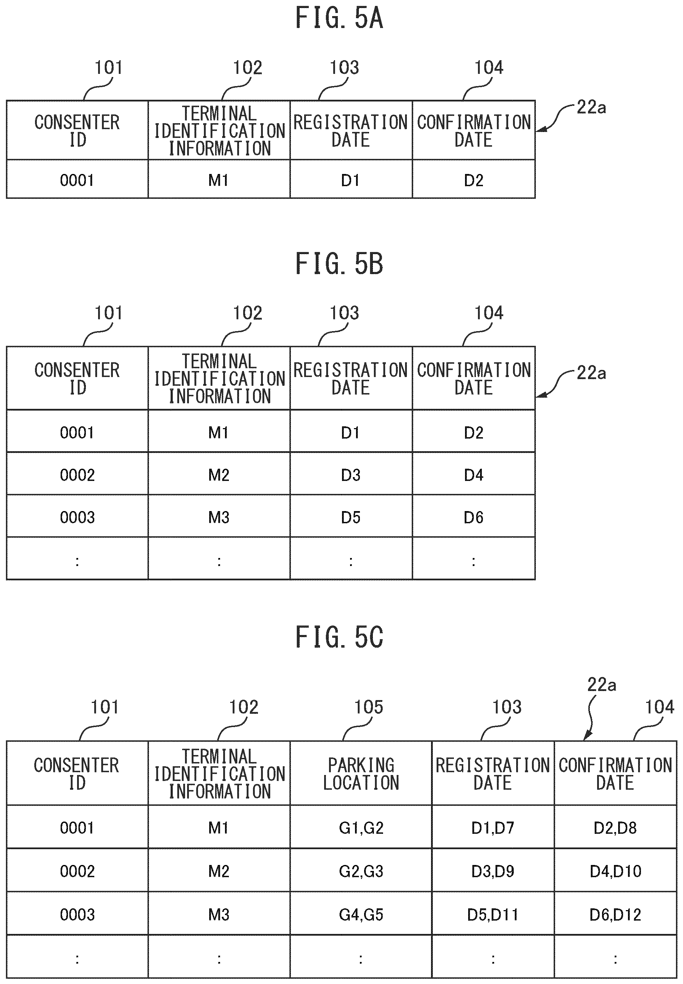

Fig. 5A is a drawing showing an example of a registration table 22a. In the example shown in Fig. 5A, the terminal identification information 102, registration date 103 and confirmation date 104 are registered in the registration table 22a in association with the consenter ID 101. In the example shown in Fig. 5A, a consenter ID 101 of a single consenter is registered in the registration table 22a. The terminal identification information is an example of the consenter identification information. The registration date 103 is the date on which the terminal identification information was registered in the registration table 22a. The confirmation date 104 is the most recent date on which it has been confirmed that the consenter identification information matches the occupant identification information. In the example shown in Fig. 5A, a single consenter ID is registered in the registration table 22a.

Fig. 5B is a drawing showing another example of a registration table 22a. Multiple consenter IDs 101 are registered in the registration table 22a. The terminal identification information 102, registration date 103 and confirmation date 104 are registered in association with each of the plurality of consenter IDs 101. In the example shown in Fig. 5B, multiple consenter IDs are registered in the registration table 22a.

Fig. 5C is a drawing showing another example of a registration table 22a. In the registration table 22a there are registered the terminal identification information 102, the parking location 105, the registration date 103 and the confirmation date 104, in association with the consenter ID 101. The terminal identification information and parking location are examples of consenter identification information. In the example shown in Fig. 5C, two types of consenter identification information are registered in the registration table 22a for each consenter ID.

When the vehicle 10 belongs to an individual, consenter identification information identifying a single consenter may be registered. When the vehicle 10 belongs to a corporation, or a single vehicle 10 is operated by multiple drivers, multiple consenter identification information items may be registered for identification of multiple consenters.

The terminal identification information includes an MAC address (physical address) and application ID. The parking location of the vehicle 10 is represented as latitude and longitude in the world coordinate system, for example. The registered country information for the vehicle 10 is represented by a country ID representing a country, for example. The owner information for the vehicle 10 is represented by an owner ID representing the owner, for example. Biometric information for an occupant includes facial feature descriptors or body weight, for example. The vehicle operation information for an occupant includes, for example, the order of operation during activation of the vehicle 10, setting of the air conditioner 5 (temperature, humidity and airflow rate), the offset amount from the center of the road, the traveling route, and the utilization factor for driving assist functions (for example, ACC: Adaptive Cruise Control).

The collection data 22b acquired in the vehicle 10 includes specific data associated with the properties or behavior of the occupant of the vehicle 10, and non-specific data not associated with the properties or behavior of the occupant of the vehicle 10. The specific data includes, for example, front images, monitor images, biometric information for the occupant (for example, facial feature descriptors and body weight), positional information for the vehicle 10, parking location, terminal identification information and owner ID. The non-specific data includes, for example, the speed of the vehicle 10, angular velocity, acceleration, vehicle operation information by an occupant (such as steering signal, accelerator signal and brake signal), country ID, the order of operation during start-up of the vehicle 10, the set temperature of the air conditioner 5, the offset amount from the center of the road, the traveling route and the utilization factor of driving assist functions.

All or some of the functions of the data collecting device 12 are functional modules implemented by a computer program operating on the processor 23, for example. The processor 23 has, as the functional module, a collecting unit 231, an acquisition unit 232, a confirming unit 233, a generating unit 234, a managing unit 235 and a registering unit 236. The managing unit 235 is an example of a data management unit. Alternatively, the functional module of the processor 23 may be a specialized computing circuit in the processor 23. The processor 23 has one or more CPUs (Central Processing Units) and their peripheral circuits. The processor 23 may also have other computing circuits such as a logical operation unit, numerical calculation unit or graphics processing unit. The data collecting device 12 is constructed as an electronic control unit (ECU), for example. The data collecting device 12 may also be constructed of multiple ECUs. In this case, the collecting unit 231, acquisition unit 232, confirming unit 233, generating unit 234, managing unit 235 and registering unit 236 may be functional modules mounted at least partially in different ECUs.

The collecting unit 231 collects collection data corresponding to the collection information, and stores the collection data 22b in the memory 22.

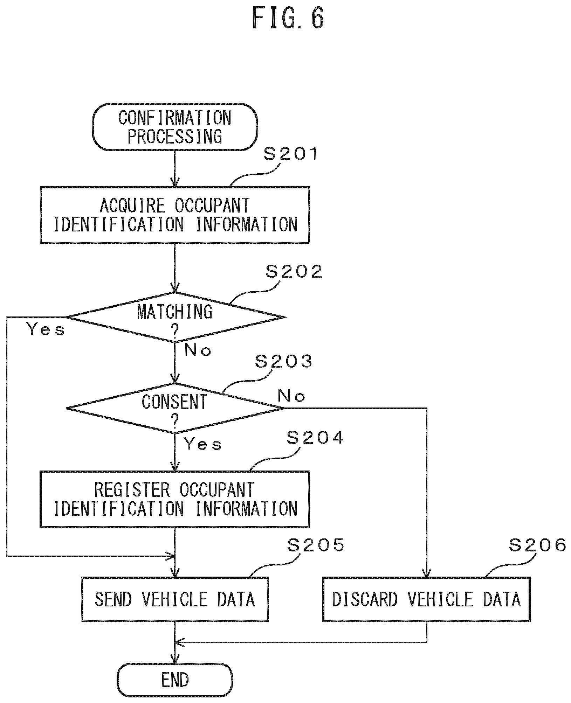

Fig. 6 is an example of an operation flow chart for confirmation processing by the data collecting device 12. Confirmation processing by the data collecting device 12 will now be described with reference to Fig. 6. The data collecting device 12 carries out the confirmation processing shown in Fig. 6 at each start timing for predetermined confirmation processing, such as when the data collecting device 12 has been activated, when collection information has been sent from the server 30 to the vehicle 10, or when a certain amount of collection data 22b has been stored in the memory 22 by the collecting unit 231.

First, the acquisition unit 232 acquires occupant identification information (step S201). As mentioned above, the occupant identification information is information corresponding to the consenter identification information, and it is information of the same type as the consenter identification information. Specifically, the occupant identification information includes, for example, one or more types of information from among terminal identification information identifying the terminal device of the occupant, the parking location of the vehicle 10, the registered country information for the vehicle 10, owner information for the vehicle 10, biometric information for the occupant and vehicle operation information for the occupant.

When multiple types of consenter identification information are registered in the registration table 22a, the acquisition unit 232 acquires occupant identification information corresponding to at least one type of consenter identification information. For example, when terminal identification information identifying of the terminal device of the consenter and the parking location of the vehicle 10 have been registered as consenter identification information in the registration table 22a, the acquisition unit 232 acquires either or both the terminal identification information and the parking location of the vehicle 10, as occupant identification information.

When multiple occupants are present in the vehicle 10, the acquisition unit 232 may acquire occupant identification information for each of the multiple occupants. Alternatively, when multiple occupants are present in the vehicle 10, the acquisition unit 232 may acquire occupant identification information for only one or more occupant from among the multiple occupants. In this case, the acquisition unit 232 preferably acquires at least occupant identification information for the driver 40.

When the occupant identification information includes terminal identification information, the acquisition unit 232 acquires, as terminal identification information, a MAC address which identifies the terminal device of the occupant, or an application ID as information that identifies an application program for confirmation of consent, installed in the terminal device of the occupant. The acquisition unit 232 communicates with the terminal device of the occupant by wireless communication or wired communication, and acquires terminal identification information from the terminal device of the occupant.

When the occupant identification information includes the parking location of the vehicle 10, the acquisition unit 232 acquires, as the parking location of the vehicle 10, either the location where the vehicle 10 was stopped for a period of at least a reference time in total, within a predetermined period, or the location where the vehicle 10 was stopped for a continuous period of at least the reference time, based on output from the positioning information receiving device 4. The predetermined period may be from 1 to 7 days, for example. The reference time may be from 5 to 12 hours, for example.

When the occupant identification information includes registered country information for the vehicle 10, the acquisition unit 232 acquires a country ID stored in the memory of the vehicle 10 (for example, an ECU memory).

When the occupant identification information includes owner information for the vehicle 10, the acquisition unit 232 accesses an external server such as the server 30 via the communication device 3, and acquires the owner ID of the vehicle 10 as owner information. The external server stores an ID management table in which the vehicle ID identifying the vehicle 10 and the owner ID are registered in association. In response to a request from the acquisition unit 232, the external server refers to the ID management table, for example, to acquire the owner ID associated with the vehicle ID of the vehicle 10, and sends it to the acquisition unit 232. When ownership of the vehicle 10 is transferred, the owner ID of the new owner becomes associated with the vehicle ID of the vehicle 10 in the ID management table.

When the occupant identification information includes biometric information for the occupant, the acquisition unit 232 acquires facial feature descriptors of the occupant as biometric information based on monitor images acquired by the monitoring camera 2b. The facial feature descriptors used may be, for example, the distance between the left and right eyes and the distance between the nose and the mouth. The acquisition unit 232 may also acquire the body weight of the occupant as biometric information for the occupant. In this case, the acquisition unit 232 acquires the body weight of the occupant based on a signal from a seating sensor (not shown) situated in the seat in the cabin 35, for example. If the monitoring camera 2b can acquire images including the faces of each of the occupants sitting on each seat in the cabin 35, or if a seating sensor is situated on each seat in the cabin 35, then it will be possible to acquire biometric information for each of multiple occupants.

When the occupant identification information includes vehicle operation information for an occupant, the acquisition unit 232 acquires the order of operation at the start-up of the vehicle 10, as vehicle operation information. For example, the acquisition unit 232 may acquire the order of: ignition ON (power switch ON) and seat belt wearing, as the order of operation during activation of the vehicle 10. As the order of operation during activation of the vehicle 10, the acquisition unit 232 may also acquire the order of operation including at least more than one from among ignition ON (power switch ON), setting of the air conditioner 5, setting of the navigation device or an audio device, wearing of a seat belt, adjustment of the seat position, adjustment of the room mirror orientation, release of the parking brake and shift operation. The order of operation may also be an order of operation that includes other operations than those mentioned above. This is because the order of operation tends to differ depending on the occupant. The acquisition unit 232 may also acquire the set temperature, set humidity or set airflow for the air conditioner 5, as vehicle operation information. The acquisition unit 232 may also acquire an offset amount from the center of the road (lane) while the vehicle 10 is traveling, as vehicle operation information. For example, the acquisition unit 232 may identify left and right lane marking lines from the front image, determining the center location of the vehicle 10 in the widthwise direction in the front image based on internal parameters and external parameters of the front camera 2a, and may calculate the offset amount from the difference between the center of the road determined from the location of the left and right lane marking lines and the center location of the vehicle 10 in the widthwise direction. The internal parameters include information such as the focal length, and the external parameters include information such as the installation location and mounting orientation of the front camera 2a. The acquisition unit 232 may also acquire the traveling route of the vehicle 10 within a predetermined time period, as vehicle operation information. For example, the traveling route is acquired as the trajectory of the location of the vehicle 10 estimated based on output from the positioning information receiving device 4. The acquisition unit 232 may also acquire the utilization factor for driving assist functions (such as ACC), as vehicle operation information.

The confirming unit 233 then compares the occupant identification information acquired by the acquisition unit 232 with the consenter identification information registered in the registration table 22a which is stored in the memory 22, and determines whether or not the occupant identification information matches the consenter identification information (step S202).

When the consenter identification information and occupant identification information include terminal identification information, the confirming unit 233 determines whether or not the terminal identification information acquired by the acquisition unit 232 matches the terminal identification information registered in the registration table 22a.

When the consenter identification information and occupant identification information include the parking location of the vehicle 10, the confirming unit 233 determines whether or not the parking location of the vehicle 10 acquired by the acquisition unit 232 matches the parking location of the vehicle 10 registered in the registration table 22a. When the parking location of the vehicle 10 acquired by the acquisition unit 232 satisfies the predetermined determination conditions, the confirming unit 233 may determine that the occupant identification information matches the consenter identification information. The determination conditions are generated by the generating unit 234 based on the parking location of the vehicle 10 registered in the registration table 22a. Processing by which the generating unit 234 generates the determination conditions will be described below.

When the consenter identification information and occupant identification information include registered country information for the vehicle 10, the confirming unit 233 determines whether or not the country ID acquired by the acquisition unit 232 matches the country ID registered in the registration table 22a.

When the consenter identification information and occupant identification information include owner information for the vehicle 10, the confirming unit 233 determines whether or not the owner ID acquired by the acquisition unit 232 matches the owner ID registered in the registration table 22a.

When the consenter identification information and occupant identification information include biometric information for an occupant, the confirming unit 233 determines whether or not the biometric information for the occupant acquired by the acquisition unit 232 matches biometric information registered in the registration table 22a. When biometric information for an occupant acquired by the acquisition unit 232 satisfies the predetermined determination conditions, the confirming unit 233 may determine that the occupant identification information matches the consenter identification information. The determination conditions are generated by the generating unit 234 based on the biometric information registered in the registration table 22a. Processing by which the generating unit 234 generates the determination conditions will be described below.

When the consenter identification information and occupant identification information include information for vehicle operation by an occupant, the confirming unit 233 determines whether or not the order of operation at the start-up time of the vehicle 10, acquired by the acquisition unit 232, matches the order of operation at the start-up time of the vehicle 10, as registered in the registration table 22a.

When the consenter identification information and occupant identification information include information for vehicle operation by an occupant, the confirming unit 233 may determine whether or not the set temperature for the air conditioner 5 acquired by the acquisition unit 232 matches the preset temperature for the air conditioner as registered in the registration table 22a. In this case, when the set temperature for the air conditioner 5 satisfies the predetermined determination conditions, the confirming unit 233 may assess that the occupant identification information matches the consenter identification information. The determination conditions are generated by the generating unit 234 based on the set temperature for the air conditioner as registered in the registration table 22a. Processing by which the generating unit 234 generates the determination conditions will be described below.

When the consenter identification information and occupant identification information include information for vehicle operation by an occupant, the confirming unit 233 may determine whether or not the offset amount from the center of the road while the vehicle 10 is traveling, as acquired by the acquisition unit 232, matches the offset amount as registered in the registration table 22a. In this case, when the offset amount satisfies the predetermined determination conditions, the confirming unit 233 considers the occupant identification information to match the consenter identification information. The determination conditions are generated by the generating unit 234 based on the offset amount registered in the registration table 22a. Processing by which the generating unit 234 generates the determination conditions will be described below.

When the consenter identification information and occupant identification information include information for vehicle operation by an occupant, the confirming unit 233 may determine whether or not the traveling route of the vehicle 10 acquired by the acquisition unit 232 matches the traveling route of the vehicle as registered in the registration table 22a. In this case, when the overlap ratio between the traveling route of the vehicle 10 acquired by the acquisition unit 232 and the traveling route registered in the registration table 22a exceeds a predetermined reference ratio, the confirming unit 233 may determine that the occupant identification information matches the consenter identification information. The reference ratio may be 60% or greater, for example.

When the consenter identification information and occupant identification information include information for vehicle operation by an occupant, the confirming unit 233 may determine whether or not the utilization factor of driving assist functions (such as ACC) acquired by the acquisition unit 232 matches the utilization factor of driving assist functions as registered in the registration table 22a. In this case, when the utilization factor of driving assist functions acquired by the acquisition unit 232 satisfies the predetermined determination conditions, the confirming unit 233 may assess that the occupant identification information matches the consenter identification information. The determination conditions are generated by the generating unit 234 based on the utilization factor of driving assist functions registered in the registration table 22a. Processing by which the generating unit 234 generates the determination conditions will be described below.

When the consenter identification information and occupant identification information include a plurality of different types of information, the confirming unit 233 may determine whether or not the occupant identification information matches the consenter identification information, for each type of information. Therefore when the consenter identification information and occupant identification information include the terminal identification information and parking location, as shown in Fig. 5C, for example, the confirming unit 233 may determine whether or not the occupant identification information and parking location of the vehicle 10 acquired by the acquisition unit 232 match the terminal identification information and parking location of the vehicle 10 as registered in the registration table 22a.

When the occupant identification information matches the consenter identification information (step S202 - Yes), the managing unit 235 allows collection data to be provided outside of the vehicle 10, and sends the collection data to the server 30 (step S205). When collection data 22b is already stored in the memory 22, the managing unit 235 sends the collection data 22b stored in the memory 22 to the server 30. The managing unit 235 also sends to the server 30 the collection data 22b that is subsequently collected by the collecting unit 231 and stored in the memory 22. In this case, the managing unit 235 may continue to send the collection data 22b collected by the collecting unit 231 to the server 30 until the next confirmation processing is carried out, for example. The registering unit 236 may also register in the registration table 22a the most recent confirmation date on which it has been confirmed that the consenter identification information matches the occupant identification information, in association with the consenter identification information.

When the consenter identification information and occupant identification information include a plurality of different types of information, the managing unit 235 may allow provision of collection data outside of the vehicle 10 and send the collection data to the server 30, when the occupant identification information has matched the consenter identification information for some of the types of information among the multiple types of information. Alternatively, the managing unit 235 may allow provision of collection data outside of the vehicle 10 and send the collection data to the server 30, only when the occupant identification information has matched the consenter identification information for all of the types of information among the multiple types of information.

When multiple occupants are present in the vehicle 10, the managing unit 235 may judge that the occupant identification information matches the consenter identification information when each occupant identification information for the multiple occupants has matched consenter identification information registered in the registration table 22a. Alternatively when multiple occupants are present in the vehicle 10, the managing unit 235 may judge that the occupant identification information matches the consenter identification information when the occupant identification information for one occupant (the driver 40, for example) among multiple occupants matches consenter identification information registered in the registration table 22a.

When the occupant identification information does not match consenter identification information (step S202 - No), on the other hand, the confirming unit 233 confirms whether or not the occupant consents to provision of collection data (step S203). In the case that the consenter identification information and occupant identification information include a plurality of different types of information, the confirming unit 233 may confirm whether or not the occupant consents to provision of collection data when the occupant identification information does not match the consenter identification information for all of the types of information.

For example, the confirming unit 233 uses the UI 7 to visually or audibly confirm whether or not the occupant consents to provision of collection data. When visual confirmation is to be made, the confirming unit 233 displays text or an image on the display device 7a of the UI 7, for example, to confirm whether or not consent is given for provision of collection data. When audible confirmation is to be made, the confirming unit 233 outputs voice data through the UI 7, for example, to confirm whether or not consent is given for provision of collection data. The occupant inputs the response representing the presence or absence of consent to the UI 7 by touch operation or voice input. When no response has been acquired from the occupant even after a predetermined reference time has elapsed after the confirming unit 233 has requested a response from the occupant, the confirming unit 233 may judge that the occupant does not consent to provision of collection data.

When the occupant has consented to provision of collection data (step S203 - Yes), the registering unit 236 registers the occupant identification information in the registration table 22a as consenter identification information, in association with the registration date (step S204). When the same occupant later uses the vehicle 10 again, therefore, the occupant identification information matches the consenter identification information, and collection data can thus be provided outside of the vehicle 10 without requesting consent from the occupant again.

After step S204, the managing unit 235 allows collection data to be provided outside of the vehicle 10, and sends the collection data to the server 30 (step S205).

When the occupant has not consented to provision of collection data (step S203 - No), on the other hand, the managing unit 235 discards the collection data that has been collected (step S206). Specifically, when collection data 22b is already stored in the memory 22, the managing unit 235 may delete the collection data 22b stored in the memory 22 and remove the collection data 22b from the vehicle 10, and even if collection data 22b is subsequently collected by the collecting unit 231, the managing unit 235 may delete the collection data 22b without storing it in the memory 22. Alternatively, the managing unit 235 may prevent collection of collection data 22 by the collecting unit 231. In this case, the managing unit 235 may delete the collection data 22b without storing it in the memory 22, or prevent collection of collection data 22 by the collecting unit 231, until the next confirmation processing is carried out, for example. This prevents collection of data containing personal information, such as specific data, from leaking outside of the vehicle 10. After step S205 or S206, the series of processing steps is complete.

Thus, the managing unit 235 sends collection data to the server 30 when occupant identification information matches the consenter identification information or when the occupant has consented to provision of collection data. On the other hand, the managing unit 235 does not send collection data to the server 30 when the occupant identification information does not match consenter identification information and the occupant has not consented to provision of collection data. Incidentally, when the occupant identification information has matched consenter identification information or when the occupant has consented to provision of collection data, the managing unit 235 may send specific data and non-specific data from among the collection data to the server 30, and when the occupant identification information does not match consenter identification information and the occupant has not consented to provision of collection data, only non-specific data from among the collection data may be sent to the server 30.

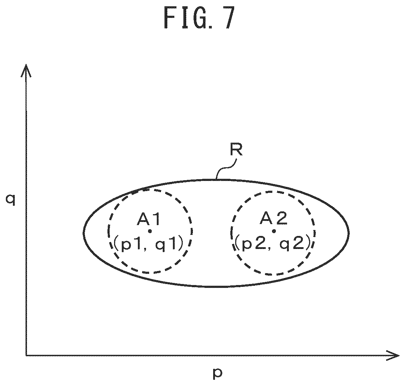

Processing by which the determination conditions are generated by the generating unit 234 based on the consenter identification information will now be explained with reference to Fig. 7.

The generating unit 234 generates the determination conditions based on the consenter identification information registered in the registration table 22a. The generating unit 234 generates determination conditions for each type of consenter identification information (that is, for the parking location of the vehicle 10, for biometric information of the consenter, and for predetermined consenter vehicle operation information).

When identification information for a single consenter is included as a single type of consenter identification information, the generating unit 234 generates the determination conditions based on identification information from a single consenter.

When multiple identification information items for a single consenter are included as a single type of consenter identification information, or when identification information items for multiple consenters are included as a single type of consenter identification information, the generating unit 234 generates the determination conditions based on the multiple identification information items from consenter(s).

When the consenter identification information is a parking location of the vehicle 10 for a single consenter, the generating unit 234 generates determination conditions with a region having a predetermined radius centered around the coordinates representing the parking location of the vehicle 10, for example.

When the consenter identification information consists of multiple parking locations of the vehicle 10 for a single consenter, or when the consenter identification information consists of parking locations of the vehicle 10 for multiple consenters, the generating unit 234 generates determination conditions with a range having a constant sum for the distances from the coordinates representing each of multiple parking locations of the vehicle 10 related to consenter identification information, for example. The phrase "consenter identification information includes multiple identification information items from consenter(s)" encompasses cases where multiple identification information items are included for the same consenter, and where identification information items are included for each of multiple consenters.

Fig. 7 is a diagram illustrating generation of determination conditions. In the example shown in Fig. 7, the abscissa represents latitude p and the ordinate represents longitude q. When the consenter identification information consists of two parking locations A1, A2 of the vehicle 10 for one consenter, the generating unit 234 generates determination conditions having a range R where the sum of the distances from the coordinates representing each of the parking locations A1, A2 is constant.

Differences may often arise among measured parking locations even when the vehicle 10 has been parked in the same parking lot. For example, when the parking location has been measured as points A1, A2 when the vehicle 10 has been parked in the same parking lot, determination conditions with range R are generated, whereby the driver of the vehicle 10 is determined to match the consenter corresponding to range R if the parking location of the vehicle 10 is measured to be within range R. This allows the generating unit 234 to automatically generate determination conditions so as to include measurement error.

When the consenter identification information consists of parking locations A1, A2 of the vehicle 10 for multiple consenters, the generating unit 234 may generate determination conditions having a range R where the sum of the distances from the coordinates representing each of the parking locations A1, A2 is constant. When multiple drivers drive a company-owned vehicle, for example, it is possible to make determination using a single determination condition, so that determination processing can be carried out rapidly without comparing occupant identification information with multiple consenter identification information items.

When the consenter identification information is a single facial feature descriptor, the generating unit 234 generates, for example, a determination condition specifying that the distance from the vector representing the facial feature descriptor (an optional distance such as Euclidean distance or Manhattan distance) is within a predetermined distance.

When the consenter identification information consists of multiple facial feature descriptors for a single consenter, the generating unit 234 generates, for example, a determination condition with a range having a constant sum for the distances from vectors representing each of multiple facial feature descriptors related to consenter identification information.

In the example shown in Fig. 7, the abscissa represents distance p between the left and right eyes, and the ordinate represents distance q between the nose and the mouth. When the consenter identification information consists of two facial feature descriptors A1, A2, the generating unit 234 generates a determination condition with range R having a constant sum for the distances from the vectors representing each of the points A1, A2.

Detection of facial feature descriptors can often result in errors even for the same driver. For example, when the results of detecting feature descriptors of the face of the same driver have been measured as points A1, A2, determination conditions are generated with a range R to determine that the two points are the same driver. This allows the generating unit 234 to automatically generate determination conditions so as to include measurement error.

When the consenter identification information consists of facial feature descriptors for multiple consenters, the generating unit 234 may generate, for example, a determination condition with a range having a constant sum for the distances from vectors representing each of the facial feature descriptors for multiple consenters.

When the consenter identification information is one body weight value for one consenter, the generating unit 234 generates a determination condition with a predetermined range centered on the body weight related to the consenter identification information, for example.

When the consenter identification information consists of multiple body weights (body weights of different values measured at different timings for one consenter, or body weights for multiple consenters), the generating unit 234 generates determination conditions with a prescribed range for each of the multiple body weights of the consenter identification information, for example.

When the consenter identification information is a single set temperature value of the air conditioner 5 for one consenter, the generating unit 234 generates a determination condition with a predetermined range centered on the set temperature, for example.

When the consenter identification information consists of multiple set temperature values of the air conditioner 5 (multiple set temperature values corresponding to one consenter or the set temperature values corresponding to multiple consenters), the generating unit 234 generates determination conditions with a predetermined range for each of the multiple set temperature values, for example.

When the consenter identification information is one offset amount from the center of the road for one consenter, the generating unit 234 generates a determination condition with a predetermined range centered on the offset amount, for example.

When the consenter identification information consists of multiple offset amounts from the center of the road (multiple offset amounts corresponding to one consenter or offset amounts corresponding to multiple consenters), the generating unit 234 generates determination conditions with a predetermined range for each of the multiple offset amounts.

When the consenter identification information is a utilization factor for one driving assist function for one consenter, the generating unit 234 generates a determination condition with a predetermined range centered on the utilization factor, for example.

When the consenter identification information consists of multiple utilization factors for driving assist functions (multiple utilization factors corresponding to one consenter, or utilization factors corresponding to multiple consenters), the generating unit 234 generates determination conditions with a predetermined range for each of the multiple utilization factors, for example.

When a long period has passed without confirming that a particular consenter identification information item registered in the registration table 22a matches occupant identification information, that information item may be deleted from the registration table 22a. This is because confirmation processing is no longer necessary for a consenter who no longer rides in the vehicle 10.

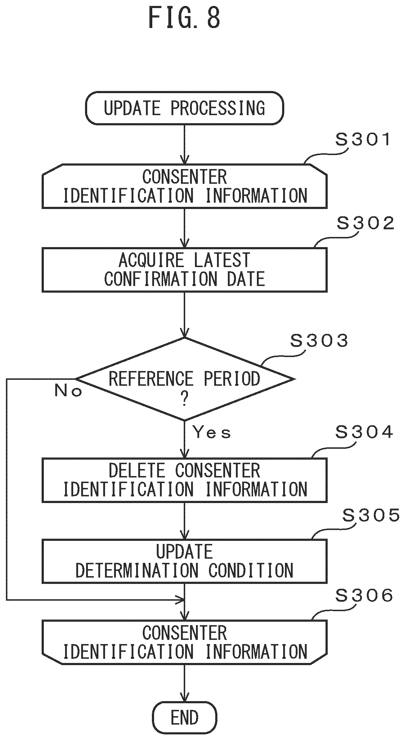

Fig. 8 is an example of an operation flow chart for update processing by the data collecting device 12. Update collection processing by the data collecting device 12 will now be described with reference to Fig. 8. The data collecting device 12 carries out the update processing shown in Fig. 8 at each update processing time having a predetermined cycle. The predetermined cycle may be 6 months or 12 months, for example.

The managing unit 235 carries out the processing of step S302 to step S305 for each of one or more consenter identification information items registered in the registration table 22a.

First, the managing unit 235 acquires the most recent confirmation date associated with the consenter identification information, for the consenter identification information registered in the registration table 22a (step S302).

When the current date has exceeded a predetermined reference period after the most recent confirmation date (step S303 - Yes), the managing unit 235 deletes the consenter identification information from the registration table 22a (step S304).

The generating unit 234 then updates the determination conditions for the type of consenter identification information that has been deleted (step S305). Updating of the determination conditions will be described below.

The processing of step S302 to step S305 is carried out for each of one or more consenter identification information items registered in the registration table 22a, and the series of processing steps is complete.

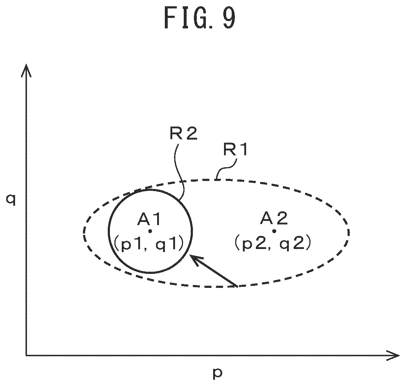

Fig. 9 is a diagram illustrating updating of determination conditions. In the example shown in Fig. 9, the abscissa represents latitude p and the ordinate represents longitude q. When the consenter identification information consists of two parking locations A1, A2 for the vehicle 10, a determination condition is generated having a range R1 in which the sum of the distances from the coordinates representing each of the points A1, A2 is constant.

When the parking location A2 has been deleted, the generating unit 234 generates new determination conditions based on the parking location A1 of the vehicle 10. For example, the generating unit 234 generates a determination condition having a region R2 with a predetermined radius centered around the parking location A1 of the vehicle 10. The determination conditions are thus updated.

As described in detail above, the data collecting device of the embodiment can confirm whether or not occupant consent has been obtained for provision of data acquired in the vehicle to outside entities, while reducing burden on the occupant.

The consent confirmation device, computer program for consent confirmation and method for confirming consent according to the embodiment described above may incorporate appropriate modifications that are still within the gist of the present disclosure. Moreover, the technical scope of the present disclosure is not limited to the embodiments described herein and includes the invention and its equivalents as laid out in the Claims.

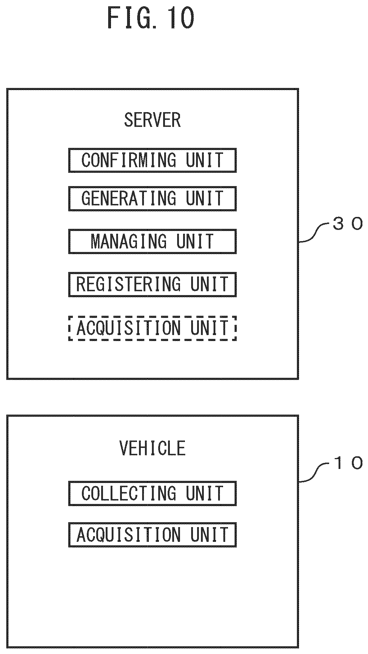

For example, in the embodiment described above, the collecting unit, acquisition unit, confirming unit, generating unit, managing unit and registering unit were disposed in the vehicle. However, the confirming unit, generating unit, managing unit and registering unit may be disposed in the server, with the collecting unit and acquisition unit being disposed in the vehicle. Fig. 10 is a diagram illustrating another embodiment of a data collecting device. The confirming unit, generating unit, managing unit and registering unit disposed in the server function together with the collecting unit and acquisition unit disposed in the vehicle to carry out the confirmation processing described above. Some of the functions of the acquisition unit may also be disposed in the server. In other words, when the occupant identification information is owner information for the vehicle 10, for example, the processing to access an external server and acquire the owner ID of the vehicle 10 may be disposed in the server.

For the embodiment described above, the consent confirmation device (data collecting device) confirmed matching of the occupant identification information with the consenter identification information after the collection data was collected, but the consent confirmation device may also confirm matching of the occupant identification information with the consenter identification information at the time when provision of collection data has been requested from outside the vehicle. When the occupant identification information and the consenter identification information do not match, the consent confirmation device may confirm whether or not the occupant consents to provision of collection data.

When the occupant identification information and the consenter identification information do not match, the confirming unit may confirm whether or not the occupant consents to provision of data, for each of both specific data associated with the properties or behavior of the occupant, and non-specific data that is not associated with the properties or behavior of the occupant. The managing unit may allow data to be provided outside of the vehicle, only for information for which it has been confirmed by the confirming unit that the occupant has consented to provision of data.

When the occupant identification information and the consenter identification information do not match, the managing unit may optionally allow data to be provided outside of the vehicle without the confirming unit confirming whether or not the occupant consents to provision of collection data, if the data is non-specific data that is not associated with properties or behavior of the occupant.

Moreover, for the embodiment described above, in the case of multiple consenter identification information items for a single type, the generating unit generated one determination condition based on the multiple consenter identification information items, but the generating unit may optionally generate multiple determination conditions based on each of the multiple consenter identification information items. In the example shown in Fig. 7, two determination conditions indicated by dash lines are generated for each of the two consenter identification information items. In this case, the occupant identification information and the consenter identification information are considered to be matching if the occupant identification information satisfies any of the two determination conditions.

## Claims

1. A consent confirmation device (12) comprising:
a confirming unit (233) that confirms whether or not an occupant of a vehicle (10) consents to provision of data acquired in the vehicle (10) when occupant identification information identifying the occupant does not match consenter identification information identifying a consenter who has consented to provision of the data.

2. The consent confirmation device (12) according to claim 1, wherein the confirming unit (233) determines whether or not the occupant identification information matches the consenter identification information in the vehicle (10).

3. The consent confirmation device (12) according to claim 1 or 2, further comprising a data management unit (235) which manages the data,
wherein the data management unit (235) stores the data in a storage device (22) of the vehicle (10) but does not provide the data outside of the vehicle (10), either until it has been determined that the occupant identification information matches the consenter identification information, or until it can be confirmed that the occupant has consented to provision of the data.

4. The consent confirmation device (12) according to claim 3, wherein the data management unit (235) discards the data when the occupant identification information and the consenter identification information do not match and the occupant has not consented to provision of the data.

5. The consent confirmation device (12) according to any one of claims 1 to 4, wherein the confirming unit (233) determines that the occupant identification information matches the consenter identification information when the occupant identification information satisfies determination condition generated based on the consenter identification information.

6. The consent confirmation device (12) according to claim 5, wherein the consenter identification information includes identification information for multiple consenters, and the device further comprises a generating unit (234) that generates the determination condition based on identification information from the multiple consenters.

7. The consent confirmation device according to any one of claims 1 to 6, wherein the consenter identification information includes terminal identification information identifying a terminal of the consenter, a parking location of the vehicle (10), registered country information for the vehicle (10), owner information for the vehicle (10), biometric information for the consenter or vehicle operation information for the consenter.

8. The consent confirmation device (12) according to any one of claims 1 to 7, wherein the data acquired in the vehicle (10) includes specific data which specify the occupant.

9. The consent confirmation device (12) according to any one of claims 1 to 8, further comprising a registering unit (236) which registers the occupant identification information as the consenter identification information when it has been confirmed by the confirming unit that the occupant has consented to provision of the data.

10. The consent confirmation device according to claim 1 or 2, further comprising a data management unit (235) that provides the data outside of the vehicle (10) when the occupant identification information matches the consenter identification information.

11. A computer program for consent confirmation, which causes a processor to execute a process, the process comprising:
confirming whether or not an occupant of a vehicle (10) consents to provision of data acquired in the vehicle (10), when occupant identification information identifying the occupant does not match consenter identification information identifying a consenter who has consented to provision of the data.

12. A method for confirming consent carried out by a computer (23) and the method comprises:
confirming whether or not an occupant of a vehicle (10) consents to provision of data acquired in the vehicle (10) when occupant identification information identifying the occupant does not match consenter identification information identifying a consenter who has consented to provision of the data.
